# DEMANDE DE BREVET EUROPEEN

(11) **EP 4 484 277 A1**
(43) Date de publication de la demande: **01.01.2025**
(21) Numéro de dépôt: 24184217.8
(22) Date de dépôt: 25.06.2024
(51) Int. Cl.: B64C 1/26, F16J 15/02, F16L 55/11, F16L 55/132

(54) **DISPOSITIF D'ÉTANCHÉIFICATION D'UNE JONCTION SITUÉE ENTRE UN CAISSON DE VOILURE ET UN FUSELAGE CENTRAL D'UN AÉRONEF, PROCÉDÉS D'ÉTANCHÉIFICATION ET AÉRONEF CORRESPONDANT**

(30) Priorité: 26.06.2023 FR 2306646
(71) Demandeur: AIRBUS OPERATIONS, 31060 Toulouse Cedex 9 (FR)
(72) Inventeur: GOUPIL, Frédéric, TOULOUSE (FR); VIAUVY, Ghislain, TOULOUSE (FR); FAUCHILLE, Vincent, TOULOUSE (FR); LE, Caroline, TOULOUSE (FR); BIGNEBAT, François, TOULOUSE (FR); GARRES, Nicolas, TOULOUSE (FR)
(74) Mandataire: Cabinet Le Guen Maillet

(57) **Abrégé**

L'invention concerne un dispositif (1) d'étanchéification d'une jonction (93) située entre une paroi (911) d'un caisson de voilure (91) et une paroi (921) d'un fuselage central (92) d'un aéronef, ledit dispositif comportant au moins un élément déformable (11) enserré entre un premier et un deuxième éléments d'extrémité rigides (13, 15). Le dispositif comporte en outre des moyens de serrage (17) permettant de rapprocher les premier et deuxième éléments d'extrémité rigides l'un de l'autre de sorte à déformer, par écrasement, l'au moins un élément déformable jusqu'à ce qu'il soit plaqué contre les parois de la jonction.

Un tel dispositif permet d'assurer l'étanchéité d'une j onction tout en permettant une installation simple et aisée depuis l'extérieur de l'aéronef. Un tel dispositif s'adapte aisément à différentes formes de j onction à étanchéifier.

## Description

### DOMAINE TECHNIQUE

La présente invention concerne un dispositif d'étanchéification d'une jonction située entre un caisson de voilure et un fuselage central d'un aéronef en particulier pour étanchéifier un réservoir de carburant formé dans le caisson de voilure. L'invention concerne également un procédé d'étanchéification d'une telle jonction et un aéronef comportant au moins un tel dispositif d'étanchéification.

### ÉTAT DE LA TECHNIQUE ANTÉRIEURE

Il est connu d'utiliser le caisson de voilure d'un aéronef pour former un réservoir de carburant. Une telle solution nécessite toutefois de s'assurer d'une étanchéité parfaite au niveau de la jonction entre le caisson de voilure et le fuselage central de l'aéronef de sorte à former le réservoir de carburant. Or, l'assemblage des pièces du caisson de voilure et du fuselage central au niveau de cette jonction crée un nombre élevé d'ouvertures qui doivent être rendues étanches afin d'éviter les fuites de carburant.

Une technique connue pour étanchéifier la jonction entre le caisson de voilure et le fuselage central de l'aéronef consiste à injecter un produit d'étanchéité contenant des particules de mousse de petites tailles au sein de ces ouvertures. Pour ce faire, au niveau de chaque ouverture laissée libre entre la voilure et le fuselage central, un opérateur doit tout d'abord placer un élément bloquant garantissant l'écoulement du produit d'étanchéité dans une seule direction lors de l'injection de ce dernier. Il doit ensuite placer un élément adhésif d'entrée du produit d'étanchéité comportant un trou de réception de la buse d'injection du pistolet d'injection de produit d'étanchéité permettant de guider le produit d'étanchéité vers l'intérieur de l'ouverture. Pour finir, l'opérateur peut injecter le produit d'étanchéité dans l'ouverture à l'aide du pistolet d'injection.

Un inconvénient de cette technique réside dans le fait que le produit d'étanchéité doit être injecté par un opérateur par l'intérieur du caisson de voilure. Or, l'espace au sein du caisson de voilure est très restreint et les ouvertures à colmater avec le produit d'étanchéité sont difficilement accessibles pour l'opérateur qui doit donc procéder à l'injection du produit dans des positions très inconfortables. De plus, au cours des prochaines années, la hauteur des voilures est amenée à diminuer afin d'améliorer les performances des voilures des aéronefs. Cette technique risque donc d'être de plus en plus complexe à mettre en oeuvre et les problématiques en termes d'ergonomie pour les opérateurs risquent d'augmenter de manière très importante. Cette technique n'est donc pas satisfaisante.

Il est donc nécessaire de fournir une solution d'étanchéification d'une jonction située entre le caisson de voilure et le fuselage central d'un aéronef qui remédie au moins en partie aux inconvénients décrits en relation avec la technique de l'art antérieur.

### EXPOSÉ DE L'INVENTION

Un objet de la présente invention est de proposer un dispositif d'étanchéification d'une jonction située entre au moins une paroi d'un caisson de voilure d'un aéronef et au moins une paroi d'un fuselage central dudit aéronef qui soit fiable et simple à mettre en oeuvre.

À cet effet, est proposé un dispositif d'étanchéification comportant :
- au moins un élément déformable comportant un premier alésage, ledit au moins un élément déformable étant destiné à être disposé dans ladite jonction entre ladite au moins une paroi dudit caisson de voilure et ladite au moins une paroi dudit fuselage central dudit aéronef,
- un premier élément d'extrémité rigide comportant un deuxième alésage et un deuxième élément d'extrémité rigide comportant un troisième alésage, lesdits deuxième et troisième alésages s'étendant coaxialement audit premier alésage, lesdits premier et deuxième éléments d'extrémité rigides étant disposés de part et d'autre dudit au moins un élément déformable et étant destinés à enserrer ledit au moins un élément déformable ; et
- des moyens de serrage comportant un écrou et une vis de serrage, ledit écrou comportant un taraudage et étant disposé contre l'un desdits éléments d'extrémité rigides et ladite vis de serrage comportant une tête de vis et une tige filetée, ladite tête de vis étant disposée contre l'autre desdits éléments d'extrémité rigides et ladite tige filetée étant enfilée dans lesdits premier, deuxième et troisième alésages pour être vissée audit écrou.

Lesdits moyens de serrage sont mobiles entre une position de repos dans laquelle lesdits moyens de serrage ne serrent pas le premier élément d'extrémité rigide et le deuxième élément d'extrémité rigide l'un vers l'autre et laissent ledit au moins un élément déformable dans une position initiale non déformée, et une position de serrage dans laquelle lesdits moyens de serrage serrent le premier élément d'extrémité rigide et le deuxième élément d'extrémité rigide l'un vers l'autre en déformant par écrasement ledit au moins un élément déformable jusqu'à ce que ledit au moins un élément déformable soit destiné à être plaqué contre ladite au moins une paroi dudit caisson de voilure et contre ladite au moins une paroi du fuselage central.

Ledit élément d'extrémité rigide contre lequel est disposé ledit écrou comporte un logement de réception et de maintien dudit écrou empêchant la rotation dudit écrou par rapport audit élément d'extrémité rigide lors du serrage et du desserrage des moyens de serrage.

Ledit dispositif comporte en outre un produit d'étanchéité destiné à être disposé dans ladite jonction entre ladite au moins une paroi dudit caisson de voilure et ladite au moins une paroi dudit fuselage central, ledit produit d'étanchéité étant configuré pour colmater des espaces laissés libres entre ledit au moins un élément déformable et ladite au moins une paroi dudit caisson de voilure et/ou ladite au moins une paroi du fuselage central.

Un tel dispositif d'étanchéification permet d'assurer l'étanchéité d'une jonction tout en permettant une installation simple et aisée depuis l'extérieur de l'aéronef. En outre, un tel dispositif peut aisément être adapté à différentes formes de jonction à étanchéifier. Avantageusement, ledit dispositif comporte un produit d'étanchéité disposé au moins en partie autour dudit au moins un élément déformable, au moins lorsque lesdits moyens de serrage dudit dispositif sont dans ladite position de serrage, ledit produit d'étanchéité étant configuré pour colmater des espaces laissés libres entre ledit au moins un élément déformable et ladite au moins une paroi dudit caisson de voilure et/ou ladite au moins une paroi du fuselage central.

Selon un exemple de réalisation particulier de l'invention, ledit au moins un élément déformable comporte au moins une cavité déformable contenant ledit produit d'étanchéité, ladite au moins une cavité déformable étant reliée à l'extérieur dudit au moins un élément déformable par au moins un canal, ladite au moins une cavité déformable comportant un volume intérieur se réduisant lors du serrage desdits moyens de serrage pour forcer l'écoulement dudit produit d'étanchéité vers l'extérieur dudit au moins un élément déformable.

Selon un aspect particulier de l'invention, ledit dispositif d'étanchéification comporte en outre au moins un élément rigide intermédiaire disposé dans ledit au moins un élément déformable ou entre au moins deux éléments déformables lorsque ledit dispositif comporte une pluralité d'éléments déformables, ledit au moins un élément rigide intermédiaire comportant un quatrième alésage s'étendant coaxialement audit premier alésage, dans lequel est enfilée ladite tige filetée.

Selon un autre aspect de l'invention, ledit au moins un élément rigide intermédiaire présente une section de forme polygonale, ledit au moins un élément déformable comportant un évidement présentant une section de forme complémentaire audit au moins un élément rigide intermédiaire, ou lesdits au moins deux éléments déformables recevant ledit au moins un élément rigide intermédiaire comportant des faces présentant des formes complémentaires audit au moins un élément rigide intermédiaire.

L'invention propose également, selon un exemple de réalisation, un procédé d'étanchéification d'une jonction située entre au moins une paroi d'un caisson de voilure d'un aéronef et au moins une paroi d'un fuselage central dudit aéronef, ledit procédé comportant les étapes de :
- mise en place d'un produit d'étanchéité entre ladite au moins une paroi dudit caisson de voilure et ladite au moins une paroi dudit fuselage central ;
- fourniture d'un dispositif d'étanchéification tel que décrit précédemment ;
- insertion et positionnement dudit dispositif d'étanchéification dans ladite jonction entre ladite au moins une paroi du caisson de voilure et ladite au moins une paroi du fuselage central dudit aéronef ; et
- serrage desdits moyens de serrage de la position de repos à ladite position de serrage. L'invention propose selon un autre exemple de réalisation, un procédé d'étanchéification d'une jonction située entre au moins une paroi d'un caisson de voilure d'un aéronef et au moins une paroi d'un fuselage central dudit aéronef, ledit procédé comportant les étapes de :
- fourniture d'un dispositif d'étanchéification tel que décrit précédemment ;
- insertion et positionnement dudit dispositif d'étanchéification dans ladite jonction entre ladite au moins une paroi du caisson de voilure et ladite au moins une paroi du fuselage central dudit aéronef ; et
- serrage desdits moyens de serrage de la position de repos à ladite position de serrage. Selon un aspect de cet autre exemple de réalisation, ladite étape de fourniture dudit dispositif d'étanchéification comporte les sous-étapes de :
- fourniture d'au moins un élément déformable comportant au moins une cavité ;
- injection d'un produit d'étanchéité dans ladite au moins une cavité dudit au moins un élément déformable ; et
- assemblage desdits premier et deuxième éléments d'extrémité rigides de part et d'autre dudit au moins un élément déformable et des moyens de serrage.

L'invention propose également un aéronef comportant un caisson de voilure présentant au moins une paroi, un fuselage central présentant au moins une paroi et au moins un dispositif d'étanchéification tel que décrit précédemment, disposé entre ladite au moins une paroi du caisson de voilure et ladite au moins une paroi du fuselage central.

### BRÈVE DESCRIPTION DES DESSINS

Les caractéristiques de l'invention mentionnées ci-dessus, ainsi que d'autres, apparaîtront plus clairement à la lecture de la description suivante de plusieurs exemples de réalisation, ladite description étant faite en relation avec les dessins joints, parmi lesquels :
[Fig. 1] est une vue de dessus d'un aéronef mettant en oeuvre une pluralité de dispositifs d'étanchéification selon l'invention ;
[Fig. 2] est une vue de côté et en coupe d'un dispositif d'étanchéification selon un premier mode de réalisation de l'invention, les moyens de serrage du dispositif d'étanchéification étant dans une position de repos ;
[Fig. 3] est une vue de côté et en coupe du dispositif d'étanchéification de la Fig. 2, les moyens de serrage du dispositif d'étanchéification étant dans une position de serrage ;
[Fig. 4] est une vue de côté et en coupe d'une jonction entre un caisson de voilure et un fuselage central d'un aéronef avant installation d'un dispositif d'étanchéification selon l'invention ;
[Fig. 5] est une vue de côté et en coupe d'une jonction entre un caisson de voilure et un fuselage central d'un aéronef selon la figure 4 après installation du dispositif d'étanchéification de la Fig. 2 ;
[Fig. 6] illustre schématiquement les étapes d'un procédé d'étanchéification mettant en oeuvre le dispositif d'étanchéification de la Fig. 2 ;
[Fig. 7] est une vue de côté et en coupe d'un dispositif d'étanchéification selon un deuxième mode de réalisation de l'invention, les moyens de serrage du dispositif d'étanchéification étant dans une position de repos ;
[Fig. 8] est une vue de côté et en coupe du dispositif d'étanchéification de la Fig. 7, les moyens de serrage du dispositif d'étanchéification étant dans une position de serrage ;
[Fig. 9] est une vue de côté et en coupe d'une variante du dispositif d'étanchéification de la Fig. 7, les moyens de serrage du dispositif d'étanchéification étant dans une position de repos ;
[Fig. 10] est une vue de côté et en coupe du dispositif d'étanchéification de la Fig. 9, les moyens de serrage du dispositif d'étanchéification étant dans une position de serrage.
[Fig. 11] illustre schématiquement les étapes d'un procédé d'étanchéification mettant en oeuvre le dispositif d'étanchéification de la Fig. 7 ou de la Fig. 9 ;
[Fig. 12] illustre schématiquement les sous-étapes d'une des étapes du procédé d'étanchéification de la Fig. 11 ;
[Fig. 13] illustre une sous-étape du procédé d'étanchéification de la Fig. 12 ;
[Fig. 14] illustre une autre sous-étape du procédé d'étanchéification de la Fig. 12 ; et
[Fig. 15] illustre une étape du procédé d'étanchéification de la Fig. 11.

### EXPOSÉ DÉTAILLÉ DE MODES DE RÉALISATION

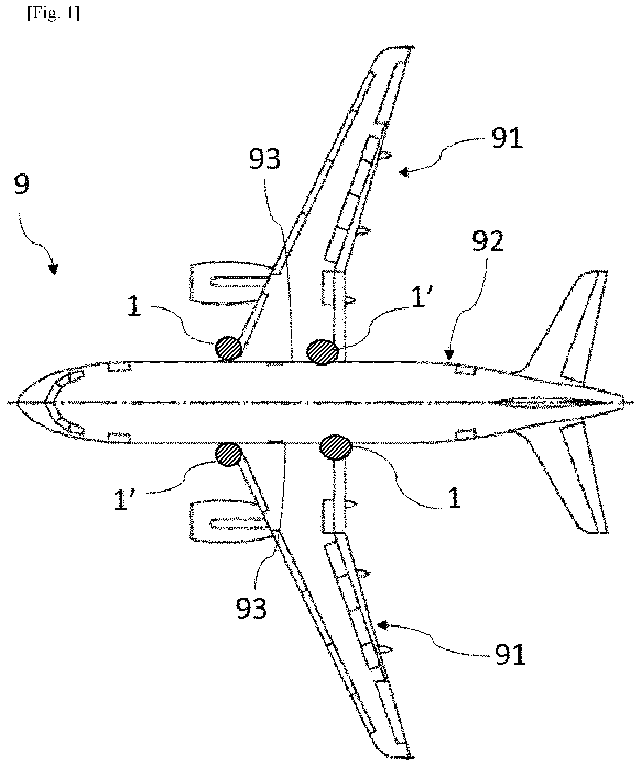

La Fig. 1 montre un aéronef 9 qui comporte un fuselage central 92 et deux caissons de voilure 91 (à savoir un caisson de voilure bâbord et un caisson de voilure tribord) qui sont assemblés au fuselage central 92, chacun au niveau d'une jonction 93. Lorsque le caisson de voilure 91 de l'aéronef 9 est utilisé pour former un réservoir de carburant, il est nécessaire de s'assurer de la parfaite étanchéité de la jonction 93 entre le caisson de voilure 91 et le fuselage central 92. Pour ce faire, la présente invention met en oeuvre un dispositif 1, 1' d'étanchéification qui permet d'assurer une étanchéité optimale de la jonction 93 tout en facilitant son installation qui peut, de préférence, être effectuée par l'extérieur de l'aéronef 9. Le dispositif 1, 1' d'étanchéification est destiné à être mis en oeuvre entre au moins une paroi 911 du caisson de voilure 91 et au moins une paroi 921 du fuselage central 92 (comme illustré sur les figures suivantes).

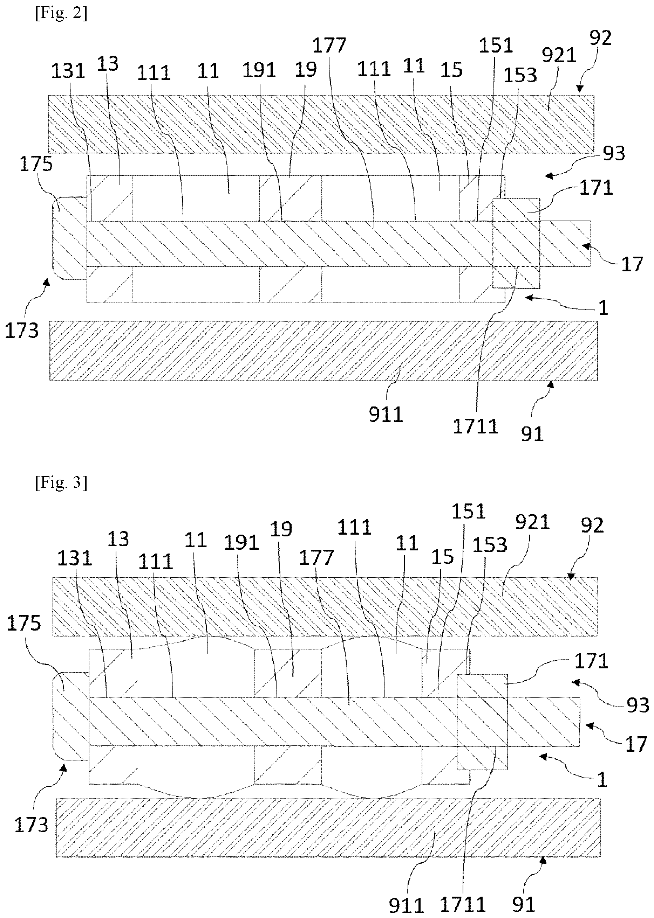

Les Fig. 2 à 5 illustrent un premier mode de réalisation d'un dispositif 1 d'étanchéification permettant d'étanchéifier la jonction 93 entre un caisson de voilure 91 et un fuselage central 92 d'un aéronef 9, et plus particulièrement ici entre une paroi 911 du caisson de voilure 91 et une paroi 921 du fuselage central 92.

Le dispositif 1 d'étanchéification comporte un premier élément d'extrémité rigide 13 et un deuxième élément d'extrémité rigide 15 comportant respectivement un premier alésage 131 et un deuxième alésage 151 qui s'étendent coaxialement. L'un des éléments d'extrémité rigides 13 et 15 comporte un logement 153 de réception et de maintien d'un écrou 171 décrit ci-après. Le logement 153 s'étend coaxialement aux premier 131 et deuxièmes 151 alésages. La géométrie des éléments d'extrémité rigides 13 et 15 dépend de la géométrie de la section de la cavité à étanchéifier. Par exemple, si la cavité présente une section de forme circulaire, . il est préférable que les éléments d'extrémité rigides 13 et 15 se présentent globalement sous la forme de rondelles, alors que si la cavité présente une section de forme rectangulaire, il est préférable que les éléments d'extrémité rigides 13 et 15 présentent également une forme rectangulaire. Les éléments d'extrémité rigides 13 et 15 sont par exemple fabriqués en métal ou dans un plastique rigide peu ou pas déformable afin de permettre une transmission optimale de la force de serrage des moyens de serrage 17 sur au moins un élément déformable 11 (décrits ci-après).

Les éléments d'extrémité rigides 13 et 15 sont disposés de part et d'autre d'au moins un élément déformable 11 et sont destinés à enserrer ce ou ces derniers. Dans l'exemple illustré, le dispositif 1 d'étanchéification comporte deux éléments déformables 11 qui sont disposés côte à côte, ou en série, entre les éléments d'extrémité rigides 13 et 15. La suite de cette description s'appuie sur cet exemple mais on comprend aisément que cette description pourrait s'appliquer à un dispositif 1 d'étanchéification ne mettant en oeuvre qu'un seul élément déformable 11, ou un nombre plus élevé d'éléments déformables 11.

Chaque élément déformable 11 comporte un alésage principal 111 qui s'étend coaxialement aux premier 131 et deuxième alésages 151 des éléments d'extrémité rigides 13 et 15.

Les éléments déformables 11 sont destinés à être déformés pour venir en contact, et plus particulièrement à être plaqués contre la paroi 911 du caisson de voilure 91 et la paroi 921 du fuselage central 92 pour assurer l'étanchéité de la jonction 93. De préférence, et afin de garantir une déformation et un retour à une position initiale optimaux et durables, les éléments déformables 11 sont fabriqués en élastomère.

La mise en oeuvre d'une pluralité d'éléments déformables 11 permet notamment de mieux s'adapter aux formes des espaces laissés libres entre les parois 911 du caisson de voilure 91 et les parois 921 du fuselage central 92 puisque ces espaces peuvent présenter des formes parfois complexes et variables.

Le dispositif 1 d'étanchéification comporte en outre des moyens de serrage 17 comportant un écrou 171 et une vis de serrage 173. L'écrou 171 comporte un taraudage 1711 s'étendant coaxialement à l'alésage principal 111. L'écrou 171 est disposé contre l'un des éléments d'extrémité rigides 13 et 15. Plus particulièrement, l'écrou 171 est positionné dans le logement 153 ménagé dans l'un des éléments d'extrémité rigides 13 et 15 de sorte à bloquer sa rotation lors du serrage des moyens de serrage 17. Dans cet exemple, le logement 153 est ménagé dans le deuxième élément d'extrémité rigide 15.

La vis de serrage 173 comporte une tête de vis 175 et une tige filetée 177. La tête de vis 175 est disposée contre l'autre des éléments d'extrémité rigides 15 et 13 (à savoir contre le premier élément d'extrémité rigide 13 dans cet exemple) et la tige filetée 177 est enfilée successivement dans le premier alésage 131, dans les alésages principaux 111, et dans le deuxième alésage 151 pour être vissée dans le taraudage 1711 de l'écrou 171.

Les moyens de serrage 17 sont mobiles entre une position de repos et une position de serrage. La position de serrage dépend entre autres de la force de serrage exercée sur les moyens de serrage 17.

Dans la position de repos (illustrée sur la Fig. 2), les moyens de serrage 17 ne serrent pas le premier élément d'extrémité rigide 13 et le deuxième élément d'extrémité rigide 15 l'un vers l'autre et laissent ainsi les éléments déformables 11 dans une position initiale non déformée. Dans une variante de réalisation, il est envisageable, dans la position de repos, que les moyens de serrage 17 exercent une faible force de serrage de sorte à maintenir sous tension, mais sans les déformer, les éléments déformables 11.

Dans la position de serrage (illustrée sur la Fig. 3), les moyens de serrage 17 serrent le premier élément d'extrémité rigide 13 et le deuxième élément d'extrémité rigide 15 l'un vers l'autre. Le serrage des éléments d'extrémité rigides 13 et 15 l'un vers l'autre permet de déformer, par écrasement, les éléments déformables 11. De préférence, le serrage des éléments d'extrémité rigides 13 et 15 l'un vers l'autre permet de déformer les éléments déformables 11 jusqu'à ce que les surfaces extérieures de ces derniers soient plaquées contre la paroi 911 du caisson de voilure 91 et la paroi 921 du fuselage central 92 de sorte à étanchéifier la j onction 93.

Du fait que le dispositif 1 d'étanchéification comporte un produit d'étanchéité 2 (décrit en détails ci-après), il se peut que les surfaces extérieures des éléments déformables 11 ne soient pas directement en contact avec la paroi 911 du caisson de voilure 91 et/ou la paroi 921 du fuselage central 92. En effet, il est envisageable que le produit d'étanchéité 2 soit intercalé entre les éléments déformables 11 et l'une et/ou l'autre des parois 911 et 912. Dans un cas particulier, le produit d'étanchéité 2 entoure totalement les éléments déformables 11 du dispositif 1 d'étanchéification de sorte que ces derniers ne sont pas directement en contact avec la paroi 911 du caisson de voilure 91 et/ou la paroi 921 du fuselage central 92.

Les éléments d'extrémité rigides 13 et 15 permettent, avec les moyens de serrage 17, de maintenir entre eux les éléments du dispositif 1 d'étanchéification, notamment avant le serrage des moyens de serrage 17, et d'appliquer la force de compression engendrée lors du serrage des moyens de serrage sur les éléments déformables 11 de sorte à déformer, par écrasement, les éléments déformables 11.

Afin de faciliter la compréhension de la suite de la description, il est entendu que la position de repos des moyens de serrage 17 correspond à une position de repos du dispositif 1 d'étanchéification et que la position de serrage des moyens de serrage 17 correspond à une position de serrage du dispositif 1 d'étanchéification.

Optionnellement, le dispositif 1 d'étanchéification peut comporter au moins un élément rigide intermédiaire 19 disposé au sein d'un élément déformable 11 ou, comme illustré dans l'exemple des Figs. 2 et 3, entre au moins deux éléments déformables 11 lorsque le dispositif 1 d'étanchéification comporte une pluralité d'éléments déformables 11. L'élément rigide intermédiaire 19 comporte un troisième alésage 191, s'étendant coaxialement à l'alésage principal 111, dans lequel est enfilée la tige filetée 177 des moyens de serrage 17.

Dans cet exemple, le dispositif 1 d'étanchéification comporte un élément rigide intermédiaire 19 disposé entre les deux éléments déformables 11. L'élément rigide intermédiaire 19 présente ici une forme globalement parallélépipédique et sépare les deux éléments déformables 11.

La mise en oeuvre d'un élément rigide intermédiaire 19 permet d'assurer un maintien optimal de la forme générale du dispositif 1 d'étanchéification ainsi qu'une meilleure transmission des efforts de serrage des moyens de serrage 17 vers le ou les éléments déformables 11. L'élément rigide intermédiaire 19 permet également de disposer en série sur la vis de serrage 173 des éléments déformables 11 identiques (et donc fabriqués avec le même moule) pour s'adapter à des cavités présentant des longueurs différentes.

Le dispositif 1 d'étanchéification comporte en outre un produit d'étanchéité 2 (non illustré sur les Figs. 2 et 3) disposé au moins en partie autour des éléments déformables 11, au moins lorsque les moyens de serrage 17 du dispositif 1 d'étanchéification sont dans la position de serrage. Le produit d'étanchéité 2 est configuré pour colmater des espaces laissés libres entre les éléments déformables 11 et la paroi 911 du caisson de voilure 91 et/ou la paroi 921 du fuselage central 92 lorsque le dispositif 1 d'étanchéification est dans la position de serrage. Le produit d'étanchéité 2 est par exemple du type mastique, et notamment du mastique de bourrage.

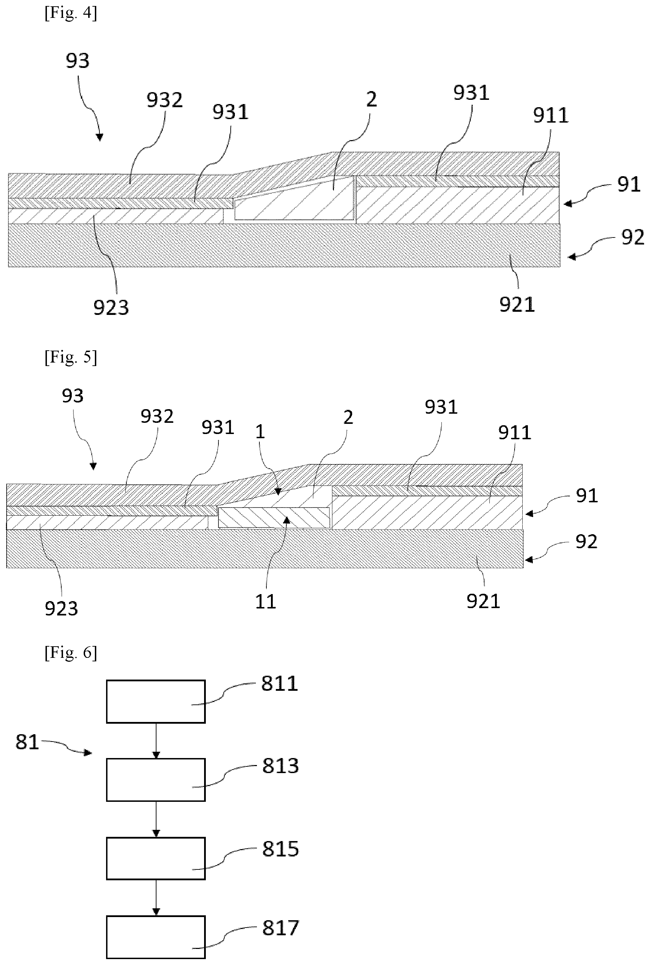

Les Figs. 4 à 6 illustrent l'utilisation d'un dispositif 1 d'étanchéification dans un procédé 81 d'étanchéification d'une jonction 93 située entre au moins une paroi 911 du caisson de voilure 91 et au moins une paroi 921 du fuselage central 92. Dans l'exemple illustré, la jonction 93 à étanchéifier se situe entre une paroi 911 d'un caisson de voilure 91 et le fuselage central 92 qui comporte ici deux parois se présentant respectivement sous la forme d'un élément 921 de construction de la porte de l'aéronef et d'un profilé vertical avant 923. La jonction 93 comporte en outre un joint d'étanchéité 931 s'étendant, d'une part, entre le profilé vertical avant 923 et un raccord d'angle 932, et d'autre part, entre la paroi 911 du caisson de voilure 91 et le raccord d'angle 932.

Le procédé 81 d'étanchéification, qui est de préférence effectué depuis l'extérieur de l'aéronef 9, comporte les étapes de :
- mise en place 811 d'un produit d'étanchéité dans la jonction 93, à savoir ici entre au moins une paroi 911 du caisson de voilure 91 et au moins une paroi 921 du fuselage central 92, et plus particulièrement ici dans l'espace laissé libre entre la paroi 911 du caisson de voilure 91 et les parois 921, 923 du fuselage 92 ;
- fourniture 813 d'un dispositif 1 d'étanchéification tel que décrit précédemment en relation avec les Figs 2 et 3 ;
- insertion et positionnement 815 du dispositif 1 d'étanchéification dans la jonction 93, à savoir ici entre le caisson de voilure 91 et le fuselage 92 (et plus précisément ici entre la paroi 911 du caisson de voilure 91 et les deux parois 921, 923 du fuselage central 92) ;
- serrage 817 des moyens de serrage 17 de la position de repos vers la position de serrage.

La mise en place 811 du produit d'étanchéité 2 est, dans l'exemple illustré sur les Figs. 4 et 5, effectuée dans l'espace laissé libre entre le caisson de voilure 91 et le fuselage 92 à l'aide d'un raccord d'angle 932 comportant un joint d'étanchéité 931 recouvrant au moins en partie la jonction 93 entre le caisson de voilure 91 et le fuselage central 92. Cette mise en place 811 du produit d'étanchéité 2, préalablement à l'insertion du dispositif 1 dans la jonction 93, permet au produit d'étanchéité 2 de se propager, c'est-à-dire de s'écouler, autour des éléments déformables 11 du dispositif 1 d'étanchéification une fois que ce dernier sera positionné dans la jonction 93. Après serrage des moyens de serrage 17 permettant de déformer et éventuellement de plaquer les éléments déformables 11 contre la paroi 911 du caisson de voilure 91 et les parois 921, 923 du fuselage 92, le produit d'étanchéité 2 présent dans la jonction 93 autour des éléments déformables 11 va permettre de colmater les éventuels espaces laissés libres entre les éléments déformables 11 et la paroi 911 du caisson de voilure 91 et/ou les parois 921, 923 du fuselage central 92.

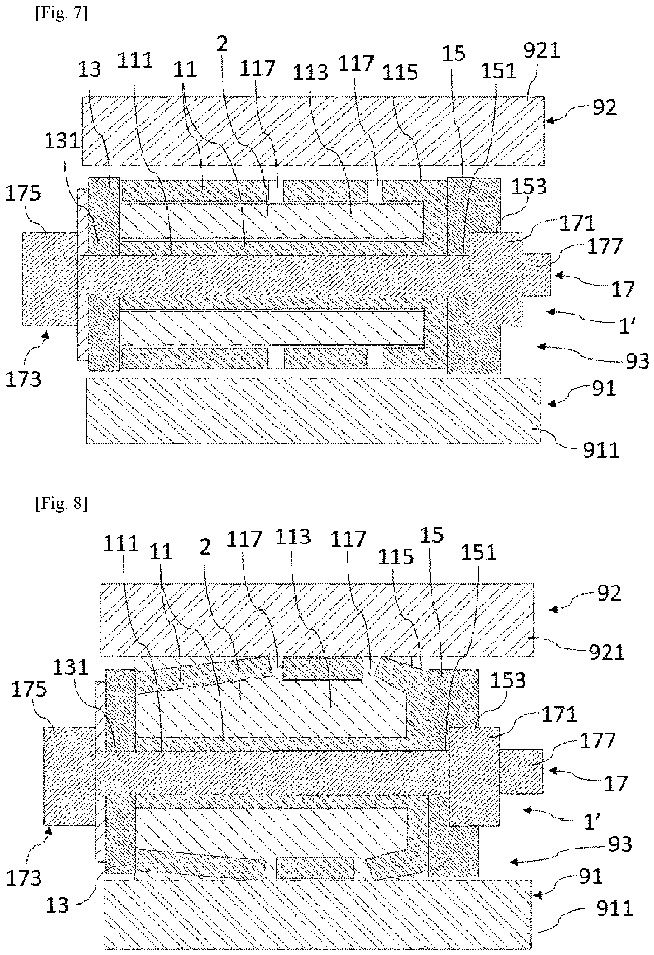

Les Figs. 7 et 8 illustrent un deuxième mode de réalisation d'un dispositif 1' d'étanchéification permettant d'étanchéifier la jonction 93 entre une voilure 91 et un fuselage central 92 d'un aéronef 9. Comme illustré dans cet exemple, le dispositif 1' d'étanchéification est disposé au niveau de la jonction 93, ici entre une paroi 911 du caisson de voilure 91 et une paroi 921 du fuselage central 92. La Fig. 7 illustre le dispositif 1' d'étanchéification dans sa position de repos tandis que la Fig. 8 illustre le dispositif 1' d'étanchéification dans sa position de serrage.

Conformément au premier mode de réalisation, le dispositif 1' d'étanchéification selon le deuxième mode de réalisation comporte au moins un élément déformable 11, des premier 13 et deuxième 15 éléments d'extrémité rigides et des moyens de serrage 17. Ces éléments présentent une structure et un fonctionnement sensiblement identiques à ceux des éléments du premier mode de réalisation et ne sont donc pas décrits de nouveau en détails. Les éléments identiques présentent donc les mêmes références numériques.

Dans l'exemple illustré, le deuxième élément d'extrémité rigide 15 contre lequel est disposé l'écrou 171 comporte un logement 153 de réception et de maintien de l'écrou 171 présentant une forme correspondante à l'écrou 171 de sorte que l'écrou 171 soit en prise avec le deuxième élément d'extrémité rigide 15 pour éviter la rotation de l'écrou 171 lors du serrage des moyens de serrage 17. De cette manière, il est possible de serrer les moyens de serrage 17 depuis l'extérieur de l'aéronef, notamment.

Le deuxième mode de réalisation diffère du premier mode de réalisation en ce que le produit d'étanchéité 2 est contenu dans le ou les éléments déformables 11 avant l'insertion du dispositif 1' d'étanchéification dans la jonction 93 et que le produit d'étanchéité 2 est donc libéré du ou des éléments déformables 11 lors du serrage des moyens de serrage 17.

Pour ce faire, au moins un des au moins un élément déformable 11 comporte au moins une cavité 113 déformable contenant le produit d'étanchéité 2. Une cavité 113 est déformable en ce sens que son volume intérieur se réduit lors du serrage des moyens de serrage 17. Chaque cavité 113 est reliée à l'extérieur 115 de l'élément déformable 11 dans lequel elle se situe par au moins un canal 117. Il est également envisageable que des cavités 113 soient reliées entre-elles.

Dans l'exemple illustré, le dispositif 1' d'étanchéification ne comporte qu'un seul élément déformable 11 comportant une unique cavité 113 reliée à l'extérieur de l'élément déformable 11 par une pluralité de canaux 117. La suite de cette description s'appuie sur cet exemple mais on comprend aisément que cette description pourrait s'appliquer à un dispositif 1 d'étanchéification mettant en oeuvre un nombre plus élevé d'éléments déformables 11 et/ou de cavités 113.

Lors du passage de la position de repos (Fig. 7) à la position de serrage (Fig. 8) des moyens de serrage 17, le volume de la cavité 113 va se réduire forçant ainsi le produit d'étanchéité 2 à s'écouler, par le ou les canaux 117, hors de la cavité 113 pour se répartir autour de l'élément déformable 11. De cette manière, le produit d'étanchéité 2 est disposé autour de l'élément déformable 11 lorsque le dispositif 1' d'étanchéification se situe dans la position de serrage, permettant ainsi de colmater des éventuels espaces laissés libres entre l'élément déformable 11 et la paroi 911 du caisson de voilure 91 et/ou la paroi 921 du fuselage central 92.

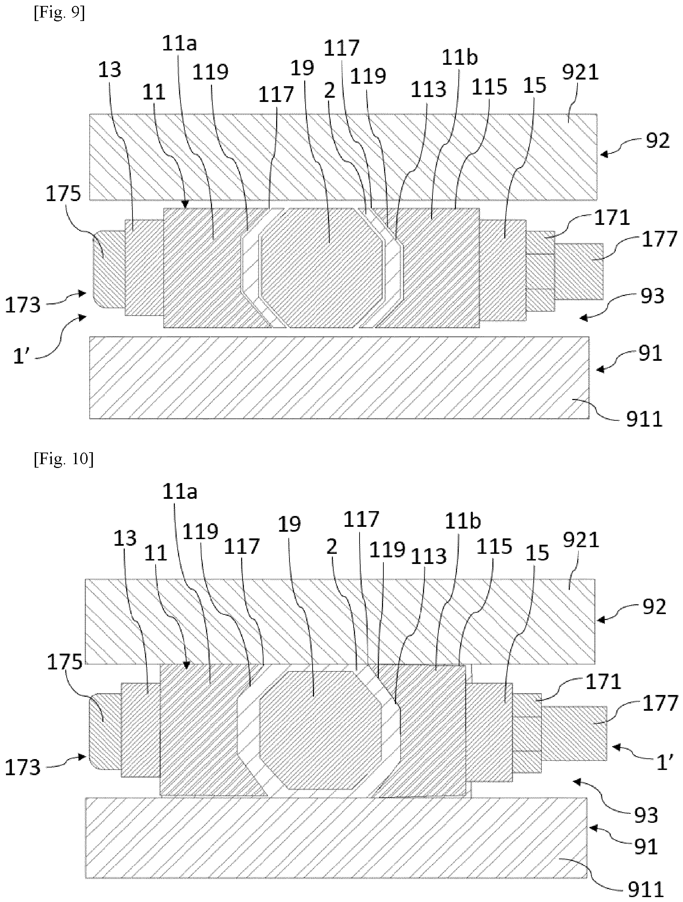

Une cavité 113 permet donc de contenir le produit d'étanchéité 2 au sein d'un élément déformable 11 avant le serrage des moyens de serrage 17 et, lors du serrage des moyens de serrage 17, de libérer le produit d'étanchéité 2 pour assurer une étanchéité optimale de la jonction 93. De préférence, la viscosité du produit d'étanchéité 2 est sélectionnée pour éviter que le produit d'étanchéité 2 ne s'écoule hors de la cavité 113 par les canaux 177 avant serrage des moyens de serrage 17. Ainsi, le produit d'étanchéité 2 reste dans la cavité 113 même lors du positionnement du dispositif 1' dans la jonction 93, comme décrit ci-après. Dans une variante du deuxième mode de réalisation, le dispositif 1' d'étanchéification comporte au moins un élément rigide intermédiaire 19 disposé au sein d'un élément déformable 11 ou entre au moins deux éléments déformables 11. Dans l'exemple illustré sur les Figs. 9 et 10, le dispositif 1' d'étanchéification comporte un élément rigide intermédiaire 19 disposé dans un élément déformable 11 comportant deux parties 11a, 11b. Comme précédemment, l'élément rigide intermédiaire 19 comporte un quatrième alésage (non visible sur ces figures) dans lequel est enfilée la tige filetée 177 des moyens de serrage 17. L'élément déformable 11 recevant l'au moins un élément rigide intermédiaire 19 comporte un évidement 119 présentant une section de forme complémentaire à l'au moins un élément rigide intermédiaire 19. Lorsque le dispositif 1' d'étanchéification comporte au moins deux éléments déformables 11 recevant ledit au moins un élément rigide intermédiaire 19, les éléments déformables 11 comportent des faces présentant des formes complémentaires audit au moins un élément rigide intermédiaire 19.

Dans cet exemple, l'élément rigide intermédiaire 19 présente une forme globalement octogonale et sépare les deux parties 11a, 11b de l'élément déformable 11. Les faces des deux parties 11a, 11b se situant en vis-à-vis et coopérant avec l'élément rigide intermédiaire 19 présentent chacune un évidement 119 de forme correspondante à l'élément rigide intermédiaire 19 lorsque le dispositif 1' d'étanchéification est dans la position de repos, notamment.

Dans cette variante, le produit d'étanchéité 2 est contenu dans une cavité 113 formée entre les deux parties 11a, 11b de l'élément déformable 11. L'élément rigide intermédiaire 19 est disposé au sein de cette cavité 113. Les canaux 117 permettant l'écoulement du produit d'étanchéité 2 hors de la cavité sont ici formés à l'intersection des deux parties 11a, 11b de l'élément déformable 11 avec l'élément rigide intermédiaire 19.

Dans cette variante, la mise en oeuvre d'un élément rigide intermédiaire 19 permet en outre d'assurer un maintien optimal de la forme générale du dispositif 1' ainsi qu'une meilleure transmission des efforts de serrage des moyens de serrage 17 vers l'élément déformable 11, de garantir une déformation souhaitée de l'élément déformable 11 et un écoulement contrôlé du produit d'étanchéité 2 vers l'extérieur 115 de l'élément déformable 11.

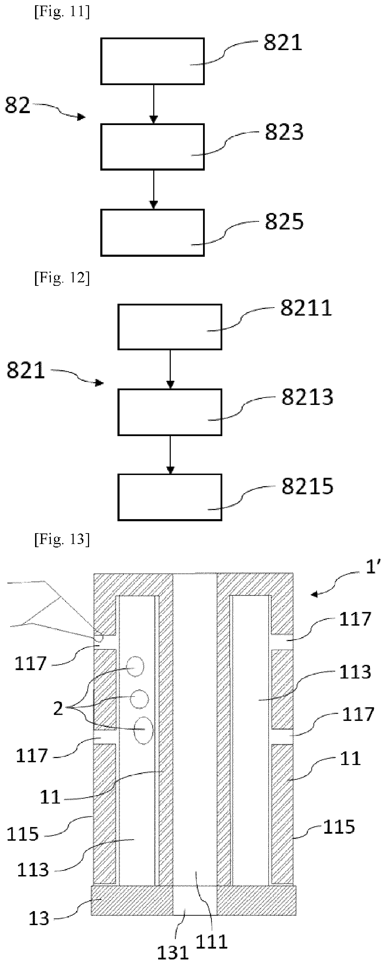

Les Figs. 11 à 15 illustrent l'utilisation d'un dispositif 1' d'étanchéification dans un procédé 82 d'étanchéification d'une jonction 93 située entre au moins une paroi 911 d'un caisson de voilure 91 et au moins une paroi 921 du fuselage central 92.

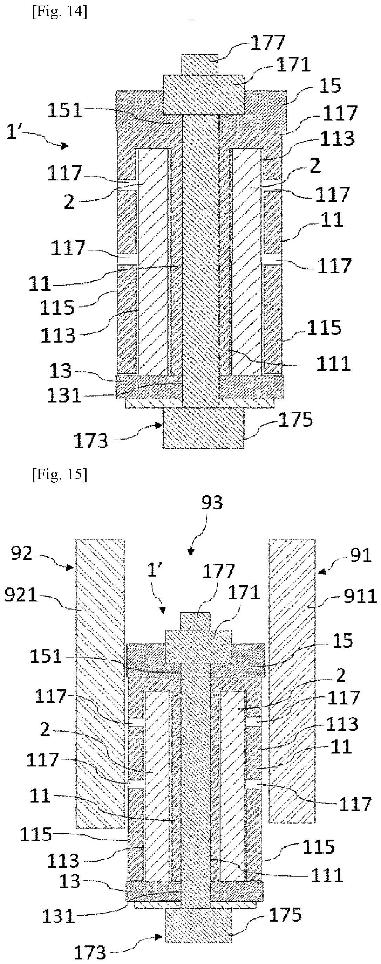

Le procédé 82 d'étanchéification, qui est de préférence effectué depuis l'extérieur de l'aéronef 9, comporte les étapes de (illustrées sur la Fig. 11) :
- fourniture 821 d'un dispositif 1' d'étanchéification tel que décrit précédemment en relation avec les Figs. 7 à 10 ;
- insertion (Fig. 15) et positionnement (Figs. 7 et 9) 823 du dispositif 1' d'étanchéification dans la jonction 93, c'est-à-dire entre l'au moins une paroi 911 du caisson de voilure 91 et l'au moins une paroi 921 du fuselage central 92 ;
- serrage 825 des moyens de serrage 17 de la position de repos à la position de serrage (Figs. 8 et 10).

L'étape de serrage 825 consiste à serrer les moyens de serrage 17 jusqu'à ce que l'au moins un élément déformable 11 soit plaqué contre l'au moins une paroi 911 du caisson de voilure 91 et l'au moins une paroi 921 du fuselage central 92. Le serrage 825 permet également au produit d'étanchéité 2 contenu dans la ou les cavités 113 de s'écouler hors de la ou des cavités 113 vers l'extérieur 115 du dispositif 1' d'étanchéification pour colmater des éventuels espaces laissés libres entre le ou les éléments déformables 11 et l'au moins une paroi 911 du caisson de voilure 91 et/ou l'au moins une paroi 921 du fuselage central 92.

L'étape 821 de fourniture d'un dispositif 1' d'étanchéification comporte les sous-étapes de (illustrées schématiquement sur la Fig. 12) :
- fourniture 8211 d'au moins un élément déformable 11 comportant au moins une cavité 113 ;
- injection 8213 (Fig. 13) d'un produit d'étanchéité 2 dans ladite au moins une cavité 113 dudit au moins un élément déformable 11 ;
- assemblage 8215 (Fig. 14) des premier 13 et deuxième 15 éléments d'extrémité rigides de part et d'autre dudit au moins un élément déformable 11 et des moyens de serrage 17.

Dans une variante, lors de la sous-étape de fourniture 8211 de l'au moins un élément déformable 11, un des premier et deuxième éléments d'extrémité rigides 13, 15 peut déjà être assemblé audit au moins un élément déformable 11, notamment lorsque ce sont les éléments d'extrémité rigides 13, 15 qui permettent de fermer la ou les cavités 13.

La sous-étape d'injection 8213 du produit d'étanchéité 2 dans ladite au moins une cavité 113 peut se faire via les canaux 117 (comme illustré sur la Fig. 13) ou directement dans la ou les cavités 113 lorsque ces dernières sont ouvertes avant l'assemblage des éléments d'extrémité rigides 13 et 15.

Il est à noter que les étapes de fourniture (813 pour le premier mode de réalisation et 821 pour le deuxième mode de réalisation) du dispositif 1, 1' d'étanchéification sont de préférence effectuées hors de l'aéronef 9, par exemple directement sur un établi situé à proximité de l'aéronef 9 ou bien dans les ateliers d'un fournisseur. Il est donc possible de prévoir, ou fabriquer, un dispositif 1, 1' d'étanchéification spécifiquement adapté à la forme de la jonction 93, quelles que soient la forme géométrique et les dimensions de cette dernière. En effet, les éléments d'extrémité rigides ainsi que le ou les éléments déformables 11 peuvent être adaptés, en termes de forme et de dimensions, à l'ouverture de la jonction 93 qui doit être étanchéifiée.

De préférence, l'ensemble du procédé 81, 82 d'étanchéification est effectué depuis l'extérieur de l'aéronef de sorte à limiter les contraintes ergonomiques et faciliter le travail des opérateurs.

Le dispositif 1, 1' d'étanchéification de l'invention permet de mettre en oeuvre un élément solide dans l'ouverture de la jonction 93 à étanchéifier, formant ainsi une solution fiable et sécurisée d'étanchéification d'une telle jonction.

## Revendications

1. Dispositif (1, 1') d'étanchéification destiné à étanchéifier une jonction (93) située entre au moins une paroi (911) d'un caisson de voilure (91) d'un aéronef (9) et au moins une paroi (921) d'un fuselage central (92) dudit aéronef (9), ledit dispositif (1, 1') comportant :
- au moins un élément déformable (11) comportant un alésage principal (111), ledit au moins un élément déformable (11) étant destiné à être disposé dans ladite jonction (93) entre ladite au moins une paroi (911) dudit caisson de voilure (91) et ladite au moins une paroi (921) dudit fuselage central (92) dudit aéronef (9) ;
- un premier élément d'extrémité rigide (13) comportant un premier alésage (131) et un deuxième élément d'extrémité rigide (15) comportant un deuxième alésage (151), lesdits premier (131) et deuxième (151) alésages s'étendant coaxialement audit alésage principal (111), lesdits éléments d'extrémité rigides (13, 15) étant disposés de part et d'autre dudit au moins un élément déformable (11) et étant destinés à enserrer ledit au moins un élément déformable (11) ; et
- des moyens de serrage (17) comportant un écrou (171) et une vis de serrage (173), ledit écrou (171) comportant un taraudage (1711) et étant disposé contre l'un desdits éléments d'extrémité rigides (13, 15) et ladite vis de serrage (173) comportant une tête de vis (175) et une tige filetée (177), ladite tête de vis (175) étant disposée contre l'autre desdits éléments d'extrémité rigides (15, 13) et ladite tige filetée (177) étant enfilée dans ledit alésage principal (111) et dans lesdits premier (131) et deuxième (151) alésages pour être vissée audit écrou (171) ;
où lesdits moyens de serrage (17) sont mobiles entre une position de repos dans laquelle lesdits moyens de serrage (17) ne serrent pas le premier élément d'extrémité rigide (13) et le deuxième élément d'extrémité rigide (15) l'un vers l'autre et laissent ledit au moins un élément déformable (11) dans une position initiale non déformée, et une position de serrage dans laquelle lesdits moyens de serrage (17) serrent le premier élément d'extrémité rigide (13) et le deuxième élément d'extrémité rigide (15) l'un vers l'autre en déformant par écrasement ledit au moins un élément déformable (11) jusqu'à ce que ledit au moins un élément déformable (11) soit destiné à être plaqué contre ladite au moins une paroi (911) dudit caisson de voilure (91) et/ou contre ladite au moins une paroi (921) du fuselage central (92) ; et
où ledit élément d'extrémité rigide (13, 15) contre lequel est disposé ledit écrou (171) comporte un logement (153) de réception et de maintien dudit écrou (171) empêchant la rotation dudit écrou (171) par rapport audit élément d'extrémité rigide (13, 15) lors du serrage et du desserrage desdits moyens de serrage (17) ;
ledit dispositif (1, 1') comportant en outre un produit d'étanchéité (2) destiné à être disposé dans ladite jonction (93) entre ladite au moins une paroi (911) dudit caisson de voilure (91) et ladite au moins une paroi (921) dudit fuselage central (92), ledit produit d'étanchéité (2) étant configuré pour colmater des espaces laissés libres entre ledit au moins un élément déformable (11) et ladite au moins une paroi (911) dudit caisson de voilure (91) et/ou ladite au moins une paroi (921) du fuselage central (92).

2. Dispositif (1, 1') d'étanchéification selon la revendication 1, **caractérisé en ce que** ledit dispositif (1, 1') comporte un produit d'étanchéité (2) disposé au moins en partie autour dudit au moins un élément déformable (11), au moins lorsque lesdits moyens de serrage (17) dudit dispositif (1, 1') sont dans ladite position de serrage.

3. Dispositif (1') d'étanchéification selon la revendication 2, **caractérisé en ce que** ledit au moins un élément déformable (11) comporte au moins une cavité (113) déformable contenant ledit produit d'étanchéité (2), ladite au moins une cavité (113) déformable étant reliée à l'extérieur (115) dudit au moins un élément déformable (11) par au moins un canal (117), ladite au moins une cavité (113) déformable comportant un volume intérieur se réduisant lors du serrage desdits moyens de serrage (17) pour forcer l'écoulement dudit produit d'étanchéité (2) vers l'extérieur (115) dudit au moins un élément déformable (11).

4. Dispositif (1, 1') d'étanchéification selon l'une quelconque des revendications 1 à 3, **caractérisé en ce que** ledit dispositif (1, 1') d'étanchéification comporte en outre au moins un élément rigide intermédiaire (19) disposé dans ledit au moins un élément déformable (11) ou entre au moins deux éléments déformables (11) lorsque ledit dispositif (1, 1') comporte une pluralité d'éléments déformables (11), ledit au moins un élément rigide intermédiaire (19) comportant un troisième alésage (191) s'étendant coaxialement audit premier alésage (111), dans lequel est enfilée ladite tige filetée (177).

5. Dispositif (1, 1') d'étanchéification selon la revendication 4, **caractérisé en ce que** ledit au moins un élément rigide intermédiaire (19) présente une section de forme polygonale, ledit au moins un élément déformable (11) comportant un évidement (119) présentant une section de forme complémentaire audit au moins un élément rigide intermédiaire (19), ou lesdits au moins deux éléments déformables (11) recevant ledit au moins un élément rigide intermédiaire (19) comportant des faces présentant des formes complémentaires audit au moins un élément rigide intermédiaire (19).

6. Procédé (81) d'étanchéification d'une jonction (93) située entre au moins une paroi (911) d'un caisson de voilure (91) d'un aéronef (9) et au moins une paroi (921) d'un fuselage central (92) dudit aéronef (9), ledit procédé comportant les étapes de :
- mise en place (811) d'un produit d'étanchéité (2) entre ladite au moins une paroi (911) dudit caisson de voilure (91) et ladite au moins une paroi (921) dudit fuselage central (92) ;
- fourniture (813) d'un dispositif (1) d'étanchéification selon la revendication 1 ;
- insertion et positionnement (813) dudit dispositif (1) d'étanchéification dans ladite jonction (93) entre ladite au moins une paroi (911) du caisson de voilure (91) et ladite au moins une paroi (921) du fuselage central (92) dudit aéronef (9) ; et
- serrage (815) desdits moyens de serrage (17) de la position de repos à ladite position de serrage.

7. Procédé (82) d'étanchéification d'une jonction (93) située entre au moins une paroi (911) d'un caisson de voilure (91) d'un aéronef (9) et au moins une paroi (921) d'un fuselage central (92) dudit aéronef (9), ledit procédé comportant les étapes de :
- fourniture (821) d'un dispositif (1') d'étanchéification selon la revendication 3 ;
- insertion et positionnement (823) dudit dispositif (1') d'étanchéification dans ladite jonction (93) entre ladite au moins une paroi (911) du caisson de voilure (91) et ladite au moins une paroi (921) du fuselage central (92) dudit aéronef (9) ; et
- serrage (825) desdits moyens de serrage (17) de la position de repos à ladite position de serrage.

8. Procédé (82) d'étanchéification selon la revendication 7, **caractérisé en ce que** ladite étape de fourniture (821) dudit dispositif (1') d'étanchéification comporte les sous-étapes de :
- fourniture (8211) d'au moins un élément déformable (11) comportant au moins une cavité (113) ;
- injection (8213) d'un produit d'étanchéité (2) dans ladite au moins une cavité (113) dudit au moins un élément déformable (11) ; et
- assemblage (8215) desdits premier (13) et deuxième (15) éléments d'extrémité rigides de part et d'autre dudit au moins un élément déformable (11) et des moyens de serrage (17).

9. Aéronef (9) comportant un caisson de voilure (91) présentant au moins une paroi (911), un fuselage central (92) présentant au moins une paroi (921) et au moins un dispositif (1, 1') d'étanchéification selon l'une quelconque des revendications 1 à 5 disposé entre ladite au moins une paroi (911) du caisson de voilure (91) et ladite au moins une paroi (921) du fuselage central (92).
